# EUROPÄISCHE PATENTSCHRIFT

(11) **EP 1 013 942 B1**
(45) Veröffentlichungstag und Bekanntmachung des Hinweises auf die Patenterteilung: **22.09.2004**
(21) Anmeldenummer: 99125319.6
(22) Anmeldetag: 20.12.1999
(51) Int. Cl.: F15B 13/043, F15C 3/14

(54) **Steuerelement für Fluid**
Control element for fluids
Elément de commande pour un fluide

(30) Priorität: 23.12.1998 DE 29822959 U
(43) Veröffentlichungstag der Anmeldung: 28.06.2000
(73) Patentinhaber: Bürkert Werke GmbH & Co., D-74653 Ingelfingen (DE)
(72) Erfinder: Dettmann, Heinrich, 74676 Niedernhall (DE)
(74) Vertreter: Sties, Jochen, Dipl.-Ing.

(56) Entgegenhaltungen:
- DE-A- 3 630 200
- DE-U- 29 507 380
- FR-A- 1 249 404
- US-A- 4 535 810
- US-A- 4 765 370
- US-A- 4 938 249

## Beschreibung

Die Erfindung betrifft ein Steuerelement für Fluid gemäß dem Oberbegriff des Anspruchs 1.

Ein Steuerelement ist aus der US-Patentschrift 4 765 370 bekannt. Es stellt ein 4/2-Wege-Ventil dar, mit dem beispielsweise hydraulische Stellzylinder angesteuert werden können. Wenn beispielsweise ein doppeltwirkender Hydraulikzylinder angesteuert wird, ist der Arbeitsanschluß der einen Steuerkammer mit der einen Arbeitskammer des Hydraulikzylinders und der Arbeitsanschluß der anderen Steuerkammer mit der anderen Arbeitskammer des Hydraulikzylinders verbunden. In einer ersten Stellung des Schaltelements, der Ruhestellung, wird die eine Arbeitskammer des Hydraulikzylinders mit Druck beaufschlagt, so daß eine Bewegung in einer ersten Richtung erfolgt, während in einer aktivierten Stellung des Schaltelements, in die das Schaltelement durch einen Elektromagneten bewegt wird, die andere Arbeitskammer des Hydraulikkolbens mit Druck beaufschlagt wird, so daß eine Bewegung in entgegengesetzter Richtung erfolgt.

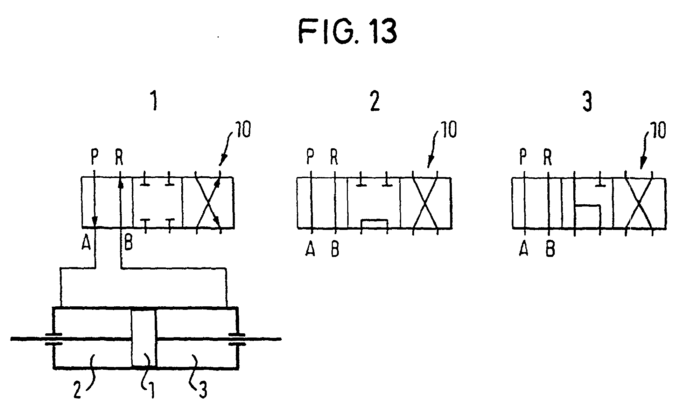

Häufig wird jedoch zusätzlich zu einer Bewegung des Hydraulikkolbens in einer ersten und einer zweiten Richtung gefordert, daß der Hydraulikkolben beispielsweise fest in einer Stellung gehalten wird oder auch frei bewegbar ist. Hierzu sind 4/3- Wege-Ventile erforderlich, wie anhand von Figur 13 beschrieben wird. In Figur 13 ist schematisch ein Hydraulikkolben 1 gezeigt, der zwischen zwei Arbeitkammern 2, 3 angeordnet ist. Die Arbeitskammer 2 ist mit einem Arbeitsanschluß A eines schematisch gezeigten und mit dem Bezugszeichen 10 versehenen 4/3-Wege-Steuerelementes verbunden, und die Arbeitskammer 3 ist mit einem Arbeitsanschluß B verbunden. Ferner sind zwei Druckanschlüsse P, R vorgesehen, wobei Anschluß P ein unter Druck stehendes Fluid bereitstellt und Anschluß R eine Rückflußleitung bildet.

Das als Beispiel 1 gezeigte Steuerelement ermöglicht drei Betriebszustände. In der linken Schaltstellung wird der Hydraulikkolben 1 nach rechts beaufschlagt. In der mittleren Schaltstellung ist der Hydraulikkolben 1 blockiert. In der linken Schaltstellung wird der Hydraulikkolben 1 nach links beaufschlagt.

Auch die Beispiele 2 und 3 ermöglichen drei Schaltstellungen, wobei jeweils die linke und die rechte Schaltstellung mit der rechten und der linken Schaltstellung des ersten Beispiels übereinstimmen. Die mittlere Schaltstellung bei Beispiel 2 bewirkt, daß der Hydraulikkolben 1 frei beweglich ist, und die mittlere Schaltstellung des Beispiels 3 bewirkt, daß der Hydraulikkolben 1 mit dem vom Druckanschluß P bereitgestellten Druck blockiert ist.

Wenn solche Schaltfunktionen gewünscht wurden, war bisher der Einsatz von vorgesteuerten Schieberventilen erforderlich.

Aus de US-A-4,535,810 ist ein Steuerventil der eingangs genannten Art bekannt. In jeder der beiden Steuerkammern sind zwei Druckanschlüsse einander gegenüberliegend angeordnet sind. Zwischen den beiden Steuerkammern ist ein Piezo-Betätigungselement angeordnet. Das Schaltelement ist eine flexible Lamelle, die sich durch das Betätigungselement hindurch erstreckt und in jeweils einer Steuerkammer endet. Im Ausgangszustand ist die Lamelle eben und befindet sich mit jedem Ende im Abstand von den Druckanschlüssen. In einer ersten betätigten Stellung ist die Lamelle in einer ersten Richtung gebogen, beispielsweise in der Mitte nach unten und dementsprechend mit beiden Enden nach oben, so daß die beiden oberen Druckanschlüsse verschlossen sind. In einer zweiten betätigten Stellung ist die Lamelle in der entgegengesetzten Richtung gebogen, so daß die beiden unteren Druckanschlüsse verschlossen sind.

Die Aufgabe der Erfindung besteht darin, ein einfaches, direkt wirkendes Steuerelement mit 4/3-Wirkungsweise zu schaffen und dadurch den gerätetechnischen Aufwand für eine Zylinderansteuerung zu reduzieren sowie eine direktere, schnellere Ansteuerung von Stellzylindern bzw. Stellgliedern zu ermöglichen.

Zur Lösung dieser Aufgabe ist gemäß einem ersten Aspekt der Erfindung bei einem Steuerelement der eingangs genannten Art vorgesehen, daß die Dichtsitze einer Steuerkammer einander gegenüberliegend auf der einen und der anderen Seite der Steuerkammer angeordnet sind und das in dieser Steuerkammer angeordnete Dichtteil mit zwei einander gegenüberliegenden Zungen ausgebildet ist, die zwischen den Dichtsitzen angeordnet sind, elastisch federnd ausgestaltet sind und in der Ruhestellung einen solchen Abstand voneinander haben, daß sie die beiden Dichtsitze gleichzeitig verschließen. Bei dieser Gestaltung sind alle Anschlüsse in der Mittelstellung oder Ruhestellung gesperrt. Durch die Bewegung des Schaltelements ausgehend von der Ruhestellung in die eine oder die andere Richtung können selektiv die gewünschten Anschlüsse geöffnet werden.

Zur Lösung dieser Aufgabe ist gemäß einem zweiten Aspekt der Erfindung bei einem Steuerelement der eingangs genannten Art vorgesehen, daß die Dichtsitze einer Steuerkammer einander gegenüberliegend auf der einen und der anderen Seite der Steuerkammer angeordnet sind und das in dieser Steuerkammer angeordnete Dichtteil entweder an dem einen oder dem anderen Dichtsitz anliegt. Bei dieser Gestaltung ist in der Ruhestellung ein Dichtsitz je Steuerkammer geschlossen. Bei einer Betätigung des Schaltelements in einer beliebigen Richtung wird eines der Dichtteile von dem entsprechenden Dichtsitz abgehoben und gegen den gegenüberliegenden Dichtsitz gedrückt, während das andere Dichtteil an dem entsprechenden Dichtsitz in Anlage verbleibt und keine Änderung des Schaltzustandes in dieser Steuerkammer auftritt. In Abhängigkeit von der Belegung der verschiedenen Anschlüsse ergibt sich eine Vielzahl von möglichen Schaltzuständen.

Bei dieser Lösung erstrecken sich die in den beiden Steuerkammern angeordneten Dichtteile entweder in derselben Ebene oder in unterschiedlichen Ebenen. In der Ruhestellung liegt dann eines der Dichtteile an dem auf der einen Seite der entsprechenden Steuerkammer angeordneten Dichtsitz an, während das andere Dichtteil an dem auf der anderen Seite der anderen Steuerkammer angeordneten Dichtsitz anliegt. Wenn die Dichtteile in derselben Ebene angeordnet sind, wird der zum Umschalten erforderliche Betätigungsweg durch unterschiedliche Abstände der Dichtsitze von der Ebene der Dichtteile in der Ruhestellung erzielt. Wenn dagegen die Dichtteile in unterschiedlichen Ebenen angeordnet sind, wird der erforderliche Betätigungsweg durch unterschiedliche Abstände erzielt, den die Dichtsitze von den sich in der Ruhestellung befindenden Dichtteilen einnehmen.

Zur Lösung dieser Aufgabe ist gemäß einem dritten Aspekt der Erfindung bei einem Steuerelement der eingangs genannten Art vorgesehen, daß die Dichtsitze einer Steuerkammer gegeneinander versetzt auf der einen und der anderen Seite der Steuerkammer angeordnet sind und das in dieser Steuerkammer angeordnete Dichtteil mit zwei nebeneinanderliegenden Zungen ausgebildet ist, von denen jede einem der Dichtsitze zugeordnet und elastisch federnd ist. Diese Gestaltung wirkt grundsätzlich wie die vorhergehend beschriebene mit den beiden einander gegenüberliegenden Zungen, wobei jedoch eine größere Anzahl von Schaltzuständen möglich ist. Falls gewünscht, kann in einer der Steuerkammern die oben beschriebene Gestaltung mit einander gegenüberliegenden Dichtsitzen und einander gegenüberliegenden Zungen vorgesehen sein, während in der anderen Steuerkammer die Gestaltung mit gegeneinander versetzten Dichtsitzen und nebeneinanderliegenden Zungen verwendet wird.

Vorzugsweise ist jedoch vorgesehen, daß in beiden Steuerkammern die Dichtsitze einer Steuerkammer gegeneinander versetzt auf der einen und der anderen Seite der entsprechenden Steuerkammer angeordnet sind. In diesem Fall ergibt sich die Maximalanzahl der möglichen Schaltzustände.

Bei dieser Ausführungsform kann entweder vorgesehen sein, daß sich die in den beiden Steuerkammern angeordneten Zungen der Dichtteile des Schaltelements in derselben Ebene erstrecken. Technisch dieselbe Wirkung kann erzielt werden, wenn die beiden in einer Steuerkammer angeordneten Zungen jeweils gegeneinander versetzt sind. Im Zusammenwirken mit einer geeigneten Anordnung der Dichtsitze relativ zur Anordnung der Zungen in der Ruhestellung sind verschiedene Zustände möglich. Entweder sind die Dichtsitze in den beiden Steuerkammern so angeordnet, daß die Zungen der Dichtteile in der Ruhestellung an allen Dichtsitzen in den beiden Steuerkammern anliegen. Alternativ ist möglich, daß die Dichtsitze in den beiden Steuerkammern so angeordnet sind, daß die Zungen der Dichtteile in der Ruhestellung an allen Dichtsitzen einer einzigen Steuerkammer und an keinem Dichtsitz der anderen Steuerkammer anliegen. Schließlich ist möglich, daß die Dichtsitze in den beiden Steuerkammern so angeordnet sind, daß die Zungen der Dichtteile in der Ruhestellung jeweils an einem Dichtsitz in jeder Steuerkammer anliegen. In Abhängigkeit von der jeweils gewählten Gestaltung ergeben sich die verschiedensten Schaltzustände, mit denen jede gewünschte Betätigungsart eines Stellglieds, beispielsweise eines hydraulischen Stellzylinders, erzielt werden kann.

Allen Ausführungsformen gemeinsam ist, daß bei einem Steuerelement mit zwei Steuerkammern die gewünschten drei Schaltstellungen erzielt werden können, ohne daß zusätzliche Schieberventile erforderlich sind. Ein solches Betätigungsorgan, mit dem das Schaltelement in die drei Stellungen gebracht werden kann, ist beispielsweise ein elektromagnetischer Antrieb mit polarisiertem Antriebselement, dessen Dauermagnet im stromlosen Zustand seiner Spule das Schaltelement in einer Mittelstellung hält, die auch die Ruhestellung darstellt, und bei Stromdurchfluß in Abhängigkeit von der Stromrichtung das Schaltelement in die eine oder die andere Richtung verstellt.

Vorteilhafte Ausgestaltungen der Erfindung ergeben sich aus den Unteransprüchen.

Die Erfindung wird nachfolgend unter Bezugnahme auf verschiedene Ausführungsformen beschrieben, die in den beigefügten Zeichnungen dargestellt sind. In diesen zeigen:
- Figur 1 schematisch einen Teil eines Gehäuses eines erfindungsgemäßen Steuerelementes mit Steuerkammer und darin angeordnetem Dichtteil;
- Figur 2 in einer schematischen Schnittansicht ein erfindungsgemäßes Steuerelement;
- Figur 3 in einem schematischen Querschnitt durch die beiden Steuerkammern ein Steuerelement gemäß einer ersten Ausführungsform der Erfindung;
- Figur 4 in einer perspektivischen abgebrochenen Ansicht ein beim Steuerelement gemäß Figur 3 verwendetes Dichtteil;
- Figur 5 in einer schematischen Draufsicht ein Schaltelement, das bei einem Steuerelement gemäß einer zweiten Ausführungsform der Erfindung verwendet werden kann;
- Figur 6 in einem schematischen Querschnitt durch die Steuerkammer ein Steuerelement gemäß der zweiten Ausführungsform der Erfindung;
- Figur 7 in einer Ansicht entsprechend derjenigen von Figur 6 ein Steuerelement gemäß einer Variante der zweiten Ausführungsform der Erfindung;
- Figur 8 in eine schematischen Querschnitt durch die Steuerkammer ein Steuerelement gemäß einer dritten Ausführungsform der Erfindung;
- Figur 9 in einer schematischen Draufsicht ein Schaltelement, das bei dem Steuerelement gemäß Figur 8 verwendet wird;
- Figur 10 verschiedene Ausgestaltungen des Steuerelementes gemäß der dritten Ausführungsform;
- Figur 11 verschiedene Ausgestaltungen einer Variante der dritten Ausführungsform;
- Figur 12 schematisch ein Betätigungsorgan, das bei den erfindungsgemäßen Steuerelementen verwendet werden kann; und
- Figur 13 schematisch ein Stellglied mit verschiedenen Steuerelementen.

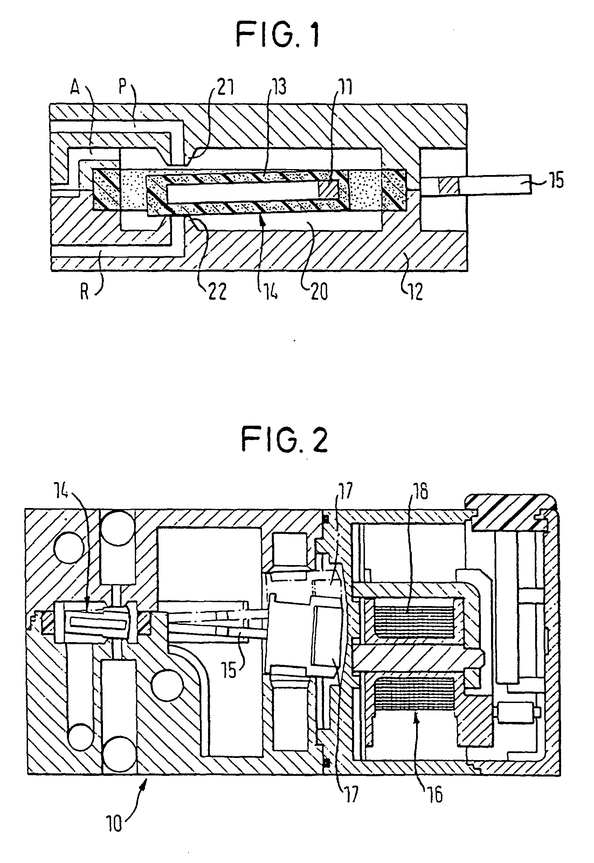

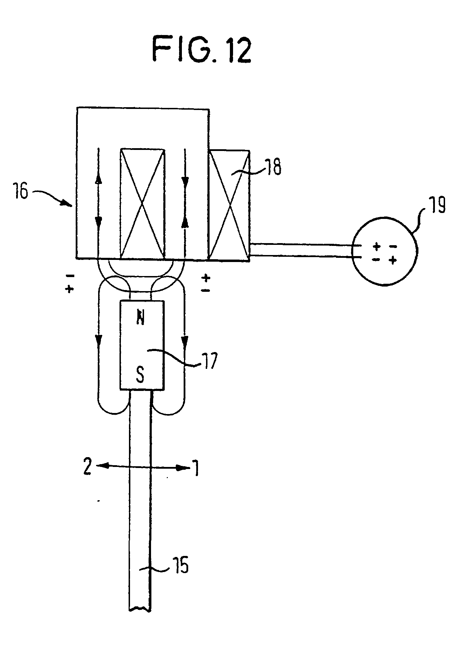

Anhand der Figuren 1 und 2 wird nun allgemein der Aufbau der erfindungsgemäßen Steuerelemente beschrieben. Das Steuerelement 10 weist ein Gehäuse 12 auf, in welchem zwei nebeneinanderliegende, voneinander isolierte Steuerkammern 20, 30 ausgebildet, von denen in Figur 1 nur eine zu sehen ist. In jeder Steuerkammer münden ein Arbeitsanschluß und zwei Druckanschlüsse, wobei der Arbeitsanschluß mit A bzw. B bezeichnet ist und die Druckanschlüsse mit P bzw. R bezeichnet sind. Zwei der Anschlüsse in jeder Steuerkammer 20 bzw. 30 sind mit einem Dichtsitz 21, 22 bzw. 31, 32 versehen. Mit den Dichtsitzen 21, 22 und 31, 32 arbeitet ein allgemein mit dem Bezugszeichen 14 versehenes Schaltelement zusammen. Das Schaltelement 14 kann durch Einwirken auf einen Betätigungsfortsatz 15 aus einer Ruhestellung heraus in eine erste und eine zweite Stellung bewegt werden. Insgesamt sind also drei Stellungen des Schaltelementes 14 möglich. Zur Betätigung des Schaltelementes 14 ist ein Betätigungsorgan 16 vorgesehen (siehe auch Figur 12), das beispielsweise als elektromagnetischer Antrieb mit einem polarisierten Antriebselement ausgeführt ist, dessen Dauermagnet im stromlosen Zustand einer Spule eine Mittelstellung des Betätigungsfortsatzes 15 hervorruft und bei Stromdurchfluß in Abhängigkeit von der Stromrichtung den Betätigungsarm entweder in Richtung des Pfeils 1 oder in Richtung des Pfeils 2 verstellt.

In Figur 12 sind die beiden Stellungen 1 und 2 eines am Betätigungsfortsatz 15 angebrachten Magneten 17 gezeigt. Die Spule des Betätigungsorgans ist mit dem Bezugszeichen 18 versehen, und die umschaltbare Spannungsquelle ist in Figur 12 mit dem Bezugszeichen 19 versehen.

Der grundsätzliche Aufbau des Schaltelements 14, das aus einem Kern 11 und einem diesen umgebenden Elastomer 13 besteht, sowie die Lagerung des Schaltelementes im Gehäuse 12 ist grundsätzlich aus dem deutschen Gebrauchsmuster 295 07 380 bekannt, auf das ausdrücklich Bezug genommen wird. Die Details der Ausgestaltung des Schaltelementes werden daher hier nicht weiter erläutert.

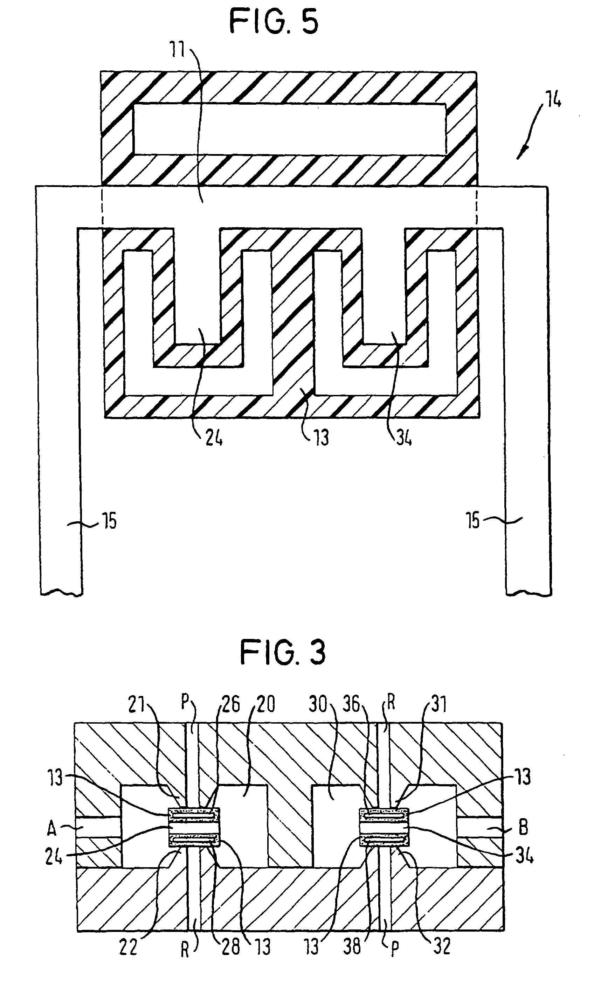

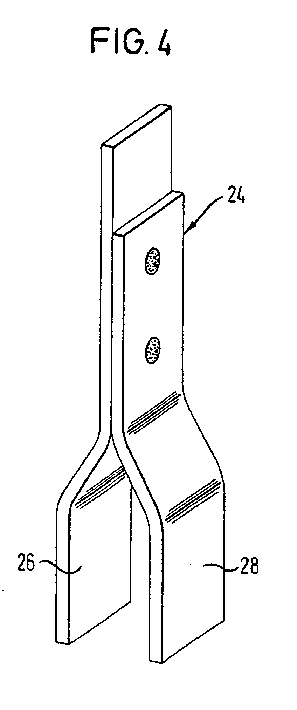

Anhand der Figuren 3 und 4 wird nun ein Steuerelement gemäß einer ersten Ausführungsform der Erfindung beschrieben. Das Schaltelement 14 ragt in jede Steuerkammer 20, 30 mit einem Dichtteil 24 bzw. 34 hinein. Die beiden Dichtteile 24, 34 sind fest mit dem Betätigungsfortsatz 15 verbunden und werden gleichzeitig mit dem Betätigungsfortsatz bewegt. Am frei in die entsprechende Steuerkammer hineinragenden Ende ist jedes Dichtteil 24, 34 mit zwei Zungen 26, 28 bzw. 36, 38 versehen. Die beiden Zungen 26, 28 bzw. 36, 38 sind einander gegenüberliegend und elastisch federnd ausgebildet. Wie in Figur 4 zu sehen ist, kann eine der Zungen durch eine Abkröpfung des entsprechenden Dichtteils ausgebildet werden, während die gegenüberliegende Zunge durch ein spiegelbildlich abgekröpftes zusätzliches Teil gebildet ist, das mit dem Dichtteil beispielsweise durch Punktschweißen verbunden ist. Um jede der Zungen 26, 28 bzw. 36, 38 herum ist selbstverständlich noch die an sich bekannte Elastomerschicht 13 vorgesehen.

Die in den Steuerkammern 20, 30 angeordneten Dichtsitze 21, 22 bzw. 31, 32 sind einander gegenüberliegend ausgestaltet (siehe Figur 3). Obwohl dies nicht notwendigerweise der Fall ist, haben die den Dichtsitzen 21, 22 bzw. 31, 32 zugeordneten Anschlüsse dieselbe Mittelachse; die entsprechenden Dichtsitze sind also konzentrisch zueinander angeordnet. Seitlich der Dichtsitze mündet in jeder Steuerkammer der verbleibende Anschluß. Bei der in Figur 3 gezeigten Gestaltung sind die Anschlüsse so belegt, daß die Dichtsitze den beiden Druckanschlüssen P, R zugeordnet sind, während der Arbeitsanschluß A bzw. B seitlich mündet.

Der Abstand der einander zugeordneten Dichtsitze 21, 22 bzw. 31, 32 voneinander ist so gewählt, daß in der Ruhestellung, also bei nicht betätigtem Betätigungsfortsatz 15, die beiden Zungen 26, 28 bzw. 36, 38 die entsprechenden Dichtsitze verschließen. Dies ist in Figur 3 zu sehen. In dieser Stellung sind also alle Fluidanschlüsse gesperrt. Wenn ausgehend von dieser Stellung auf den Betätigungsfortsatz eingewirkt wird, werden entweder die beiden Dichtteile 24, 34 nach oben bewegt, wodurch der Anschluß R der Steuerkammer 20 und der Anschluß P der Steuerkammer 30 mit den Arbeitsanschlüssen A, B verbunden werden, oder die Dichtteile 24, 34 werden nach unten bewegt, wodurch die Druckanschlüsse R der Steuerkammer 20 und P der Steuerkammer 30 mit den Arbeitsanschlüssen A, B verbunden werden. Auf diese Weise ist ein 4/3-Wege-Steuerelement geschaffen.

Durch eine abweichende Belegung der verschiedenen Anschlüsse des gezeigten Steuerelementes sind andere Schaltzustände möglich, wie leicht nachvollzogen werden kann.

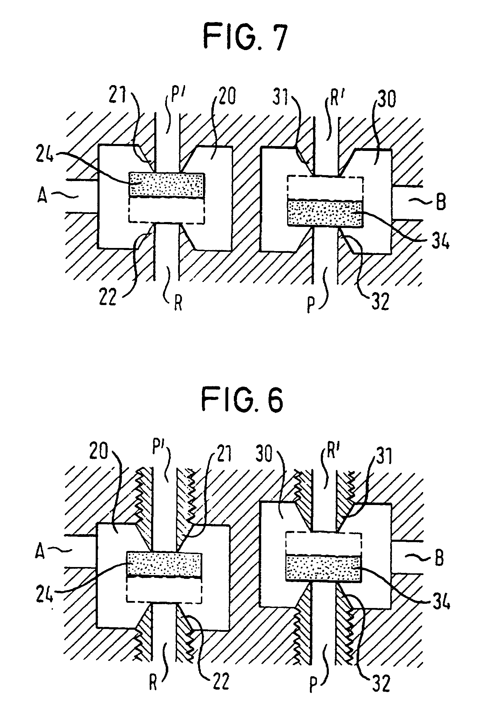

Anhand der Figuren 5 und 6 wird nun eine zweite Ausführungsform des erfindungsgemäßen Steuerelementes beschrieben. Das Schaltelement 14 weist zwei nebeneinander angeordnete Dichtteile 24, 34 auf, die in derselben Ebene angeordnet sind (siehe insbesondere Figur 6). Die in den Steuerkammern 20, 30 angeordneten Dichtsitze 21, 22 bzw. 31, 32 ragen verschieden weit in die Steuerkammern hinein. Wie in Figur 6 zu sehen ist, ragt der auf der oberen Seite der Steuerkammer 20 angeordnete Dichtsitz 21 so weit in die Steuerkammer hinein, daß er am sich in der Ausgangsstellung befindenden Dichtteil 24 anliegt. In ähnlicher Weise ragt der an der unteren Seite der Steuerkammer 30 angeordnete Dichtsitz 32 so weit in die Steuerkammer 30 hinein, daß er an dem sich in der Ruhestellung befindenden Dichtteil 34 anliegt. Der auf der unteren Seite der Steuerkammer 20 angeordnete Dichtsitz 22 sowie der auf der oberen Seite der Steuerkammer 30 angeordnete Dichtsitz 31 sind im Abstand von dem sich in der Ruhestellung befindenden Dichtteil 24 bzw. 34 angeordnet.

Ausgehend von der in Figur 6 gezeigten Ruhestellung der Dichtteile 24, 34 kann das Schaltelement in zwei Stellungen bewegt werden. In einer ersten Stellung, in der die beiden Dichtteile 24, 34 nach oben beaufschlagt werden, verlagert sich das Dichtteil 24 nicht weiter, da es bereits am Dichtsitz 21 anliegt und elastisch verformt wird. Dagegen wird das Dichtteil 34 vom Dichtsitz 32 abgehoben und gegen den Dichtsitz 31 gedrückt. In dieser Stellung ist also der Druckanschluß P mit dem Arbeitsanschluß B der Steuerkammer 30 verbunden, während hinsichtlich der Steuerkammer 20 keine Änderung des Schaltzustandes auftritt. Wenn dagegen aus der Ruhestellung heraus die Dichtteile 24, 34 nach unten beaufschlagt werden, ergibt sich hinsichtlich der Steuerkammer 30 keine Änderung des Schaltzustandes, während das Dichtteil 24 vom Dichtsitz 21 abgehoben und gegen den Dichtsitz 22 gedrückt wird. In diesem Fall wird also der hier mit P' bezeichnete Druckanschluß mit dem Arbeitsanschluß A der Steuerkammer 20 verbunden.

In Figur 7 ist eine Variante zu der in den Figuren 5 und 6 gezeigten zweiten Ausführungsform dargestellt. Der Unterschied besteht darin, daß hier die auf der oberen Seite der Steuerkammern 20, 30 angeordneten Dichtsitze, 21, 31 sowie die auf der unteren Seite der Steuerkammern angeordneten Dichtsitze 22, 32 sich jeweils auf demselben Niveau befinden. Ferner sind die Dichtteile 24, 34 nicht mehr in derselben Ebene angeordnet, sondern gegeneinander verschränkt. Die Wirkungsweise ist ähnlich wie bei der zweiten Ausführungsform. Wenn ausgehend von der in Figur 7 gezeigten Ruhestellung die Dichtteile 24, 34 nach oben beaufschlagt werden, ergibt sich hinsichtlich der Steuerkammer 20 keine Änderung des Schaltzustandes, während das Dichtteil 34 in der Steuerkammer 30 vom Dichtsitz 32 abgehoben und gegen den Dichtsitz 31 gedrückt wird. Wenn dagegen die Dichtteile 24, 34 nach unten beaufschlagt werden, ergibt sich hinsichtlich der Steuerkammer 30 keine Änderung des Schaltzustandes, während das Dichtteil 24 der Steuerkammer 20 vom Dichtsitz 21 abgehoben und gegen den Dichtsitz 22 gedrückt wird.

Sowohl bei der in den Figuren 5 und 6 dargestellten zweiten Ausführungsform als auch bei der in Figur 7 gezeigten Variante der zweiten Ausführungsform können abweichende Schaltzustände erzielt werden, indem die Belegung der Anschlüsse geeignet vertauscht wird.

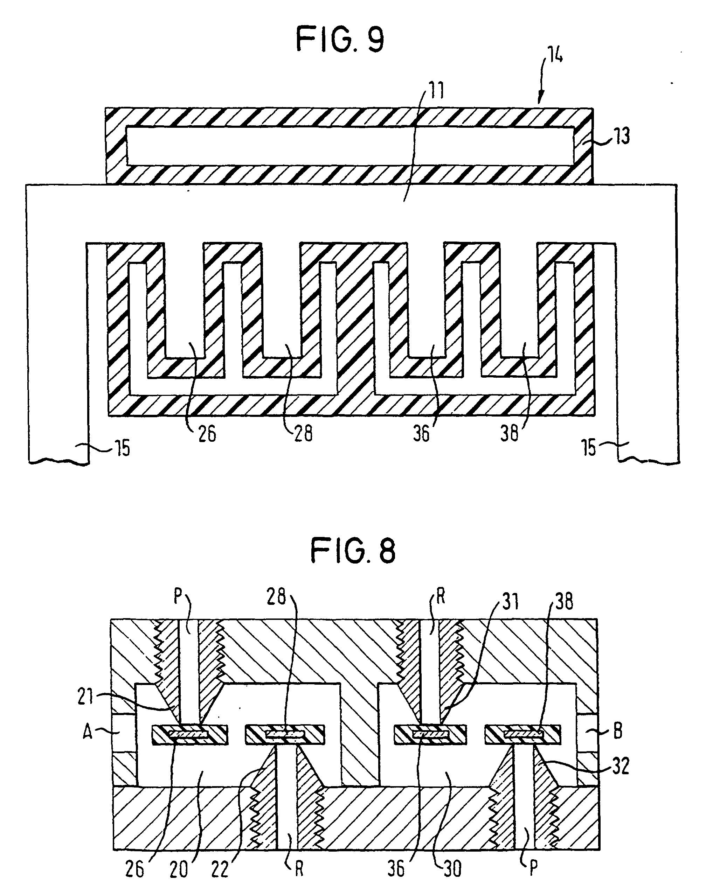

Anhand der Figuren 8 und 9 wird nun eine dritte Ausführungsform eines erfindungsgemäßen Steuerelementes beschrieben. Bei dieser Ausführungsform sind die in den Steuerkammern 20, 30 angeordneten Dichtsitze nicht mehr einander koaxial gegenüberliegend ausgebildet, sondern gegeneinander versetzt, wie in Figur 8 zu sehen ist. Dabei ragen die an der oberen Seite der Steuerkammern 20, 30 angeordneten Dichtsitze 21, 31 bis auf dasselbe Niveau in die Steuerkammern hinein, und auch die an der unteren Seite der Steuerkammern 20, 30 angeordneten Dichtsitze 22, 32 befinden sich untereinander auf demselben Niveau.

Das in die Steuerkammer 20 bzw. 30 hineinragende Dichtteil des Schaltelementes 14 besteht für jede Steuerkammer aus zwei nebeneinander angeordneten Zungen. In die Steuerkammer 20 ragen somit zwei Zungen 26, 28 hinein, und in die Steuerkammer 30 ragen zwei Zungen 36, 38 hinein. Alle Zungen 26, 28, 36, 38 erstrecken sich in der Ruhestellung in derselben Ebene. Wie in Figur 8 zu sehen ist, ist der Abstand des von den Dichtsitzen 21, 31 definierten Niveaus von dem von den Dichtsitzen 22, 32 definierten Niveau so bemessen, daß sämtliche Zungen in der Ruhestellung des Schaltelementes 14 an den ihnen zugeordneten Dichtsitzen anliegen und diese verschließen. In der in Figur 8 gezeigten Ruhestellung sind somit sämtliche Anschlüsse blockiert.

Wenn ausgehend von der in Figur 8 gezeigten Ruhestellung die Zungen 26, 28, 36, 38 nach oben beaufschlagt werden, ergibt sich hinsichtlich der Zungen 26, 36 keine Änderung des Zustandes, da diese Zungen lediglich elastisch nachgeben und weiterhin an den entsprechenden Dichtsitzen anliegen. Jedoch werden die Zungen 28, 38 von den ihnen zugeordneten Dichtsitzen 22, 32 abgehoben, und der Arbeitsanschluß A der Steuerkammer 20 wird mit dem Druckanschluß R verbunden, während der Arbeitsanschluß B der Steuerkammer 30 mit dem Druckanschluß P verbunden wird.

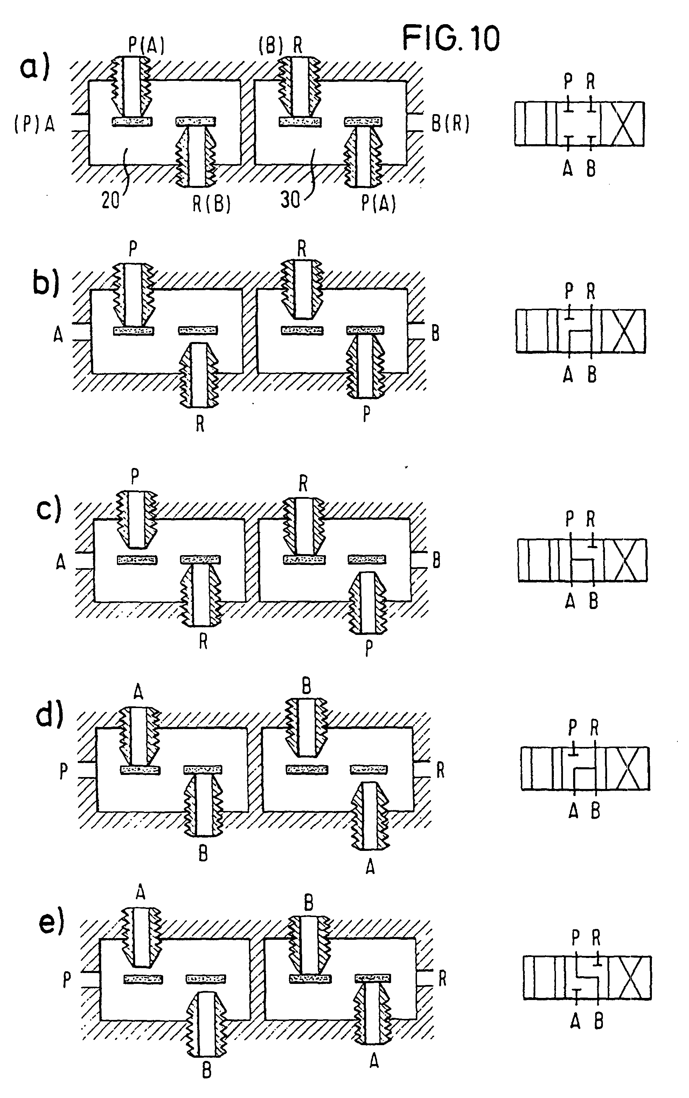

In Figur 10 sind in den Darstellungen a bis e verschiedene Steuerelemente gemäß der dritten Ausführungform gezeigt, bei denen jeweils durch eine Änderung des Abstandes der Dichtsitze von den zugehörigen Zungen in der Ruhestellung und durch unterschiedliche Belegung der verschiedenen Anschlüsse verschiedene Schaltzustände erzielt werden. Die sich ergebenden Schaltzustände lassen sich aus den Darstellungen und den ebenfalls gegebenen Schaltsymbolen entnehmen, so daß sie hier nicht im einzelnen beschrieben werden.

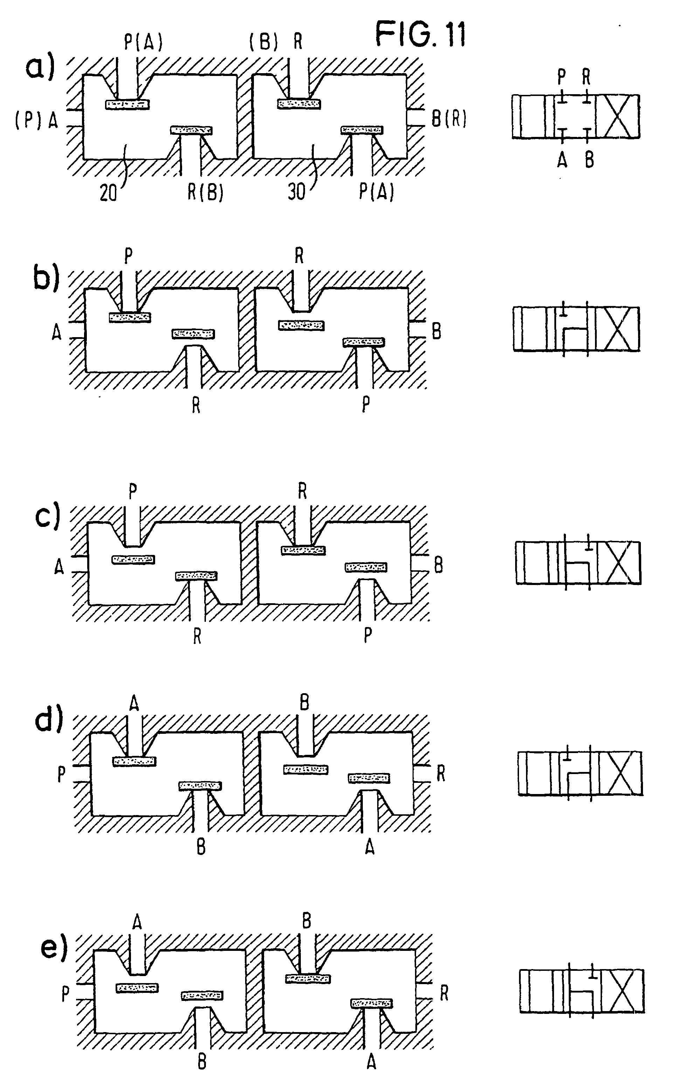

In Figur 11 sind in den Darstellungen a bis e verschiedene Steuerelemente gezeigt, die eine Variante der dritten Ausführungsform darstellen und auf dem aus Figur 7 bekannten Grundgedanken beruhen, daß die Zungen des Schaltelementes gegeneinander verschränkt sind. Auf diese Weise lassen sich im Zusammenspiel mit unterschiedlichen Belegungen der Anschlüsse und unterschiedlichen Abständen zwischen den Dichtsitzen und den Zungen in der Ruhestellung dieselben Schaltzustände erzielen, wie sie in den Darstellungen a bis e von Figur 10 gezeigt sind.

## Patentansprüche

1. Steuerelement für Fluid, mit einem Gehäuse (12), in dem zwei Steuerkammem (20; 30) gebildet sind, die gegeneinander isoliert sind und jeweils einen Arbeitsanschluß sowie zwei Druckanschlüsse aufweisen, wobei zwei der Anschlüsse mit jeweils einem Dichtsitz (21, 22; 31, 32) versehen sind, einem Schaltelement (14), das bewegbar im Gehäuse (12) gelagert ist und in jeder Steuerkammer (20; 30) ein Dichtteil (24; 34) aufweist, das mit den Dichtsitzen (21, 22; 31, 32) derart zusammenwirken kann, daß diese geöffnet oder geschlossen sind, und mit einem Betätigungsorgan (16) für das Schaltelement (14), wobei das Betätigungsorgan (16) das Schaltelement (14) in drei Stellungen bringen kann, **dadurch gekennzeichnet, daß** die Dichtsitze (21, 22; 31, 32) einer Steuerkammer (20; 30) einander gegenüberliegend auf der einen und der anderen Seite der Steuerkammer (20; 30) angeordnet sind und das in dieser Steuerkammer angeordnete Dichtteil (24; 34) mit zwei einander gegenüberliegenden Zungen (26, 28; 36, 38) ausgebildet ist, die zwischen den Dichtsitzen angeordnet sind, elastisch federnd ausgestaltet sind und in der Ruhestellung einen solchen Abstand voneinander haben, daß sie die beiden Dichtsitze (21, 22; 31, 32) gleichzeitig verschließen.

2. Steuerelement für Fluid, mit einem Gehäuse (12), in dem zwei Steuerkammern (20; 30) gebildet sind, die gegeneinander isoliert sind und jeweils einen Arbeitsanschluß sowie zwei Druckanschlüsse aufweisen, wobei zwei der Anschlüsse mit jeweils einem Dichtsitz (21, 22; 31, 32) versehen sind, einem Schaltelement (14), das bewegbar im Gehäuse (12) gelagert ist und in jeder Steuerkammer (20; 30) ein Dichtteil (24; 34) aufweist, das mit den Dichtsitzen (21, 22; 31, 32) derart zusammenwirken kann, daß diese geöffnet oder geschlossen sind, und mit einem Betätigungsorgan (16) für das Schaltelement (14), wobei das Betätigungsorgan (16) das Schaltelement (14) in drei Stellungen bringen kann, **dadurch gekennzeichnet, daß** die Dichtsitze (21, 22; 31, 32) einer Steuerkammer (20: 30) einander gegenüberliegend auf der einen und der anderen Seite der Steuerkammer angeordnet sind und in der Ruhestellung das in dieser Steuerkammer angeordnete Dichtteil (24, 34) entweder an dem einen oder dem anderen Dichtsitz anliegt.

3. Steuerelement nach Anspruch 2, **dadurch gekennzeichnet, daß** die in den beiden Steuerkammern angeordneten Dichtteile (24; 34) sich in derselben Ebene erstrecken und in der Ruhestellung eines der Dichtteile (24) an dem auf der einen Seite der entsprechenden Steuerkammer (20) angeordneten Dichtsitz (21) anliegt, während das andere Dichtteil (34) an dem auf der anderen Seite der anderen Steuerkammer (30) angeordneten Dichtsitz (32) anliegt.

4. Steuerelement nach Anspruch 2, **dadurch gekennzeichnet, daß** die in den beiden Steuerkammern angeordneten Dichtteile (24; 34) sich in unterschiedlichen Ebenen erstrecken und in der Ruhestellung eines der Dichtteile (24) an dem auf der einen Seite der entsprechenden Steuerkammer (20) angeordneten Dichtsitz (21) anliegt, während das andere Dichtteil (34) an dem auf der anderen Seite der anderen Steuerkammer (30) angeordneten Dichtsitz (32) anliegt.

5. Steuerelement für Fluid, mit einem Gehäuse (12), in dem zwei Steuerkammern (20; 30) gebildet sind, die gegeneinander isoliert sind und jeweils einen Arbeitsanschluß sowie zwei Druckanschlüsse aufweisen, wobei zwei der Anschlüsse mit jeweils einem Dichtsitz (21, 22; 31, 32) versehen sind, einem Schaltelement (14), das bewegbar im Gehäuse (12) gelagert ist und in jeder Steuerkammer (20; 30) ein Dichtteil (24; 34) aufweist, das mit den Dichtsitzen (21, 22; 31, 32) derart zusammenwirken kann, daß diese geöffnet oder geschlossen sind, und mit einem Betätigungsorgan (16) für das Schaltelement (14), wobei das Betätigungsorgan (16) das Schaltelement (14) in drei Stellungen bringen kann, **dadurch gekennzeichnet, daß** die Dichtsitze (21, 22; 31, 32) einer Steuerkammer gegeneinander versetzt auf der einen und der anderen Seite der Steuerkammer (20; 30) angeordnet sind und das in dieser Steuerkammer angeordnete Dichtteil (24; 34) mit zwei nebeneinanderliegenden Zungen (26, 28; 36, 38) ausgebildet ist, von denen jede einem der Dichtsitze (21, 22; 31, 32) zugeordnet und elastisch federnd ist.

6. Steuerelement nach Anspruch 5, **dadurch gekennzeichnet, daß** in beiden Steuerkammern (20; 30) die Dichtsitze (21, 22; 31, 32) einer Steuerkammer (20; 30) gegeneinander versetzt auf der einen und der anderen Seite der entsprechenden Steuerkammer (20; 30) angeordnet sind.

7. Steuerelement nach Anspruch 6, **dadurch gekennzeichnet, daß** die in den beiden Steuerkammern (20; 30) angeordneten Zungen (26, 28; 36, 38) der Dichtteile des Schaltelements (14) sich in derselben Ebene erstrecken.

8. Steuerelement nach Anspruch 6, **dadurch gekennzeichnet, daß** die beiden in einer Steuerkammer (20; 30) angeordneten Zungen (26, 28; 36, 38) jeweils gegeneinander versetzt sind.

9. Steuerelement nach Anspruch 7 oder Anspruch 8, **dadurch gekennzeichnet, daß** die Dichtsitze (21, 22; 31, 32) in den beiden Steuerkammern (20; 30) so angeordnet sind, daß die Zungen (26, 28; 36, 38) der Dichtteile (24; 34) in der Ruhestellung an allen Dichtsitzen (21, 22; 31, 32) in den beiden Steuerkammern (20; 30) anliegen.

10. Steuerelement nach Anspruch 7 oder Anspruch 89, **dadurch gekennzeichnet, daß** die Dichtsitze (21, 22; 31, 32) in den beiden Steuerkammern (20; 30) so angeordnet sind, daß die Zungen (26, 28, 36, 38) der Dichtteile (24; 34) in der Ruhestellung an allen Dichtsitzen (21, 22; 31, 32) einer einzigen Steuerkammer (20) und an keinem Dichtsitz (31, 32) der anderen Steuerkammer (30) anliegen.

11. Steuerelement nach Anspruch 7 oder Anspruch 8, **dadurch gekennzeichnet, daß** die Dichtsitze (21, 22; 31, 32) in den beiden Steuerkammern (20; 30) so angeordnet sind, daß die Zungen (26, 28; 36, 38) der Dichtteile (24; 34) in der Ruhestellung jeweils an einem Dichtsitz (21; 32) in jeder Steuerkammer (20; 30) anliegen.

## Claims

1. A fluid control element, comprising a housing (12) in which two control chambers (20; 30) are formed which are isolated from one another and each have one working port and two pressure ports, two of the ports being provided with one sealing seat (21, 22; 31, 32) each, a switching element (14) which is movably mounted in the housing (12) and has a sealing part (24; 34) in each control chamber (20; 30), the sealing part being adapted to cooperate with the sealing seats (21, 22; 31, 32) such that the latter are opened or closed, and further comprising an actuating member (16) for the switching element (14), the actuating member (16) being adapted to move the switching element (14) into three positions, **characterized in that** the sealing seats (21, 22; 31, 32) of one control chamber (20; 30) are disposed opposite each other on the one and the other side of the control chamber (20; 30), and the sealing part (24; 34) arranged in this control chamber is configured with two mutually opposing tongues (26, 28; 36, 38) which are disposed between the sealing seats, are designed so as to be elastically springy and, in the resting position, are spaced apart from each other such that they simultaneously close the two sealing seats (21, 22; 31, 32).

2. A fluid control element, comprising a housing (12) in which two control chambers (20; 30) are formed which are isolated from one another and each have one working port and two pressure ports, two of the ports being provided with one sealing seat (21, 22; 31, 32) each, a switching element (14) which is movably mounted in the housing (12) and has a sealing part (24; 34) in each control chamber (20; 30), the sealing part being adapted to cooperate with the sealing seats (21, 22; 31, 32) such that the latter are opened or closed, and further comprising an actuating member (16) for the switching element (14), the actuating member (16) being adapted to move the switching element (14) into three positions, **characterized in that** the sealing seats (21, 22; 31, 32) of one control chamber (20; 30) are disposed opposite each other on the one and the other side of the control chamber, and in the resting position the sealing part (24, 34) arranged in this control chamber is in contact with either the one or the other sealing seat.

3. The control element according to claim 2, **characterized in that** the sealing parts (24; 34) disposed in the two control chambers extend in the same plane and in the resting position one of the sealing parts (24) is in contact with the sealing seat (21) disposed on the one side of the corresponding control chamber (20) whilst the other sealing part (34) is in contact with the sealing seat (32) disposed on the other side of the other control chamber (30).

4. The control element according to claim 2, **characterized in that** the sealing parts (24; 34) disposed in the two control chambers extend in different planes and in the resting position one of the sealing parts (24) is in contact with the sealing seat (21) disposed on the one side of the corresponding control chamber (20) whilst the other sealing part (34) is in contact with the sealing seat (32) disposed on the other side of the other control chamber (30).

5. A fluid control element, comprising a housing (12) in which two control chambers (20; 30) are formed which are isolated from one another and each have one working port and two pressure ports, two of the ports being provided with one sealing seat (21, 22; 31, 32) each, a switching element (14) which is movably mounted in the housing (12) and has a sealing part (24; 34) in each control chamber (20; 30), the sealing part being adapted to cooperate with the sealing seats (21, 22; 31, 32) such that the latter are opened or closed, and further comprising an actuating member (16) for the switching element (14), the actuating member (16) being adapted to move the switching element (14) into three positions, **characterized in that** the sealing seats (21, 22; 31, 32) of one control chamber are disposed mutually offset on the one and the other side of the control chamber (20; 30), and the sealing part (24; 34) arranged in this control chamber is configured with two tongues (26, 28; 36, 38) arranged side by side, each of which is assigned to one of the sealing seats (21, 22; 31, 32) and is elastically springy.

6. The control element according to claim 5, **characterized in that** in both control chambers (20; 30) the sealing seats (21, 22; 31, 32) of a control chamber (20; 30) are arranged mutually offset on the one and the other side of the corresponding control chamber (20; 30).

7. The control element according to claim 6, **characterized in that** the tongues (26, 28; 36, 38), arranged in the two control chambers (20; 30), of the sealing parts of the switching element (14) extend in the same plane.

8. The control element according to claim 6, **characterized in that** the two tongues (26, 28; 36, 38) arranged in one control chamber (20; 30) are each mutually offset.

9. The control element according to claim 7 or claim 8, **characterized in that** the sealing seats (21, 22; 31, 32) are arranged in the two control chambers (20; 30) such that in the resting position the tongues (26, 28; 36, 38) of the sealing parts (24; 34) are in contact with all of the sealing seats (21, 22; 31, 32) in the two control chambers (20; 30).

10. The control element according to claim 7 or claim 8, **characterized in that** the sealing seats (21, 22; 31, 32) are arranged in the two control chambers (20; 30) such that in the resting position the tongues (26, 28; 36, 38) of the sealing parts (24; 34) are in contact with all of the sealing seats (21, 22; 31, 32) of a single control chamber (20) and with no sealing seat (31, 32) of the other control chamber (30).

11. The control element according to claim 7 or claim 8, **characterized in that** the sealing seats (21, 22; 31, 32) are arranged in the two control chambers (20; 30) such that in the resting position the tongues (26, 28; 36, 38) of the sealing parts (24; 34) are each in contact with one sealing seat (21; 32) in each control chamber (20; 30).

## Revendications

1. Elément de commande pour fluide, comportant un boîtier (12) dans lequel sont formées deux chambres de commande (20 ; 30) qui sont isolées l'une de l'autre et qui présentent chacune un raccord de travail ainsi que deux raccords de pression, deux des raccords étant chacun pourvus d'un siège d'étanchéité (21, 22 ; 31, 32), un élément de commutation (14) qui est logé mobile dans le boîtier (12) et qui présente dans chaque chambre de commande (20 ; 30) une pièce d'étanchéité (24 ; 34) qui peut coopérer avec les sièges d'étanchéité (21, 22 ; 31, 32) de telle sorte que ceux-ci sont ouverts ou fermés, et un organe d'actionnernent (16) pour l'élément de commutation (14), l'organe d'actionnement (16) pouvant amener l'élément de commutation (14) dans trois positions, **caractérisé en ce que** les sièges d'étanchéité (21 22 ; 31, 32) d'une chambre de commande (20 ; 30) sont agencés à l'opposé l'un par rapport à l'autre de part et d'autre de la chambre de commande (20 ; 30) et **en ce que** la pièce d'étanchéité (24 ; 34) agencée dans cette chambre de commande est formée de deux languettes (26, 28 ; 36 ; 38) opposées l'une à l'autre, qui sont agencées entre les sièges d'étanchéité, qui présentent l'élasticité d'un ressort et qui, en position de repos, sont écartées l'une de l'autre de telle sorte qu'elles ferment simultanément les deux sièges d'étanchéité (21, 22 ; 31, 32).

2. Elément de commande pour fluide , comportant un boîtier (12) dans lequel sont formées deux chambres de commande (20 ; 30) qui sont isolées l'une de l'autre et qui présentent chacune un raccord de travail ainsi que deux raccords de pression, deux des raccords étant chacun pourvus d'un siège d'étanchéité (21, 22 ; 31, 32), un élément de commutation (14) qui est logé mobile dans le boîtier (12) et qui présente dans chaque chambre de commande (20 ; 30) une pièce d'étanchéité (24 ; 34) qui peut coopérer avec les sièges d'étanchéité (21, 22 ; 31, 32) de telle sorte que ceux-ci sont ouverts ou fermés, et un organe d'actionnement (16) pour l'élément de commutation (14), l'organe d'actionnement (16) pouvant amener l'élément de commutation (14) dans trois positions, **caractérisé en ce que** les sièges d'étanchéité (21 22 ; 31, 32) d'une chambre de commande (20 ; 30) sont agencés à l'opposé l'un par rapport à l'autre de part et d'autre de la chambre de commande et, dans la position de repos, la partie d'étanchéité (24, 34) agencée dans cette chambre de commande est en appui sur l'un ou sur l'autre siège d'étanchéité.

3. Elément de commande selon la revendication 2, **caractérisé en ce que** les pièces d'étanchéité (24 ; 34) agencées dans les deux chambres de commande s'étendent dans le même plan et **en ce que** dans la position de repos, l'une des pièces d'étanchéité (24) est en appui sur le siège d'étanchéité (21) agencé d'un côté de la chambre de commande (20) correspondante, alors que l'autre pièce d'étanchéité (34) est en appui sur le siège d'étanchéité (32) agencé de l'autre côté de l'autre chambre de commande (30).

4. Elément de commande selon la revendication 2, **caractérisé en ce que** les pièces d'étanchéité (24 ; 34) agencées dans les deux chambres de commande s'étendent dans des plans différents et **en ce qu'**en position de repos, l'une des pièces d'étanchéité (24) est en appui sur le siège d'étanchéité (21) agencé d'un côté de la chambre de commande (20) correspondante, tandis que l'autre pièce d'étanchéité (34) est en appui sur le siège d'étanchéité (32) agencé de l'autre côté de l'autre chambre de commande (30).

5. Elément de commande pour fluide, comportant un boîtier (12) dans lequel sont formées deux chambres de commande (20 ; 30) qui sont isolées l'une de l'autre et qui présentent chacune un raccord de travail ainsi que deux raccords de pression, deux des raccords étant chacun pourvus d'un siège d'étanchéité (21, 22 ; 31, 32), un élément de commutation (14) qui est logé mobile dans le boîtier (12) et qui présente dans chaque chambre de commande (20 ; 30) une pièce d'étanchéité (24 ; 34) qui peut coopérer avec les sièges d'étanchéité (21, 22 ; 31, 32) de telle sorte que ceux-ci sont ouverts ou fermés, et un organe d'actionnement (16) pour l'élément de commutation (14), l'organe d'actionnement (16) pouvant amener l'élément de commutation (14) dans trois positions, **caractérisé en ce que** les sièges d'étanchéité (21 22 ; 31, 32) d'une chambre de commande sont agencés en décalage l'un par rapport à l'autre de part et d'autre de la chambre de commande et **en ce que** la pièce d'étanchéité (24 ; 34) agencée dans cette chambre de commande est formée de deux languettes (26, 28 ; 36, 38) juxtaposées, chacune étant associée à l'un des sièges d'étanchéité (21, 22 ; 31, 32) et présentant l'élasticité d'un ressort.

6. Elément de commande selon la revendication 5, **caractérisé en ce que** dans les deux chambres de commande (20 ; 30), les sièges d'étanchéité (21, 22 ; 31, 32) d'une chambre de commande (20 ; 30) sont agencées en décalage l'un par rapport à l'autre de part et d'autre de la chambre de commande (20 ; 30) correspondante.

7. Elément de commande selon la revendication 6, **caractérisé en ce que** les languettes (26, 28 ; 36, 38) des pièces d'étanchéité de l'élément de commutation (14) s'étendent dans le même plan.

8. Elément de commande selon la revendication 6, **caractérisé en ce que** les deux languettes (26, 28 ; 36, 38) agencées dans une chambre de commande (20 ; 30) sont décalées l'une par rapport à l'autre.

9. Elément de commande selon la revendication 7 ou 8, **caractérisé en ce que** les sièges d'étanchéité (21, 22 ; 31, 32) sont agencés dans les deux chambres de commande (20 ; 30) de telle sorte qu'en position de repos, les languettes (26, 28 ; 36, 38) des pièces d'étanchéité (24 ; 34) sont en appui sur tous les sièges d'étanchéité (21, 22 ; 31, 32) dans les deux chambres de commande (20 ; 30).

10. Elément de commande selon la revendication 7 ou 8, **caractérisé en ce que** les sièges d'étanchéité (21, 22 ; 31, 32) sont agencés dans les deux chambres de commande (20 ; 30) de telle sorte qu'en position de repos, les languettes (26, 28 ; 36, 38) des pièces d'étanchéité (24 ; 34) sont en appui sur tous les sièges d'étanchéité (21, 22 ; 31, 32) d'une seule chambre de commande (20) et sur aucun siège d'étanchéité (31, 32) de l'autre chambre de commande (30).

11. Elément de commande selon la revendication 7 ou 8, **caractérisé en ce que** les sièges d'étanchéité (21, 22 ; 31, 32) sont agencés dans les deux chambres de commande (20 ; 30) de telle sorte qu'en position de repos, les languettes (26, 28 ; 36, 38) des pièces d'étanchéité (24 ; 34) sont chacune en appui sur un siège d'étanchéité (21 ; 32) dans chaque chambre de commande (20 ; 30).
